# EUROPEAN PATENT SPECIFICATION

(11) **EP 2 811 936 B1**
(45) Date of publication and mention of the grant of the patent: **05.10.2016**
(21) Application number: 13714694.0
(22) Date of filing: 05.02.2013
(51) Int. Cl.: A61D 9/00, A01K 27/00

(54) **HERBAL CUSHION ATTACHABLE TO A DOG HARNESS**
PFLANZLICHES KISSEN ZUR BEFESTIGUNG AN EINEM HUNDEGESCHIRR
COUSSIN AUX PLANTES POUVANT ÊTRE FIXÉ À UN HARNAIS POUR CHIENS

(30) Priority: 07.02.2012 HU 1200021
(43) Date of publication of application: 17.12.2014
(73) Proprietor: Sebö, Gyula, 2310 Szigetszentmiklós (HU)
(72) Inventor: Sebö, Gyula, 2310 Szigetszentmiklós (HU)
(86) International application number: PCT/IB2013/050960
(87) International publication number: WO 2013/118054

(56) References cited:
- EP-A2- 2 243 356
- WO-A1-2008/090390
- DE-A1- 3 204 099
- US-A1- 2006 236 954
- US-A1- 2007 245 978
- US-B1- 7 004 922

## Description

The invention relates to a herbal cushion attachable to a dog harness, the middle part of which runs along the spine of the dog, while the side parts extend towards the chest, and is attachable to the inner lining of a dog harness in a releasable manner.

The use of herbs in mattresses is an ancient method applied by man consciously or accidentally already in the last millennium in beds filled with dried straw. This is how the first pieces of dried lavender, sage, thyme, rosemary or chamomile got into mattresses.

The task of pillows and mattresses is to make our beds comfortable. Accordingly, they are made to be elastic, possibly shape-retaining. The most preferable are mattresses, pillows, or other pads to be placed in them that contain a high proportion of natural materials. Pillows and mattresses have a protective cover, which is usually removable, openable.

In the prior art several pads, plasters are known, in which the active substances of herbs are deposited. The therapeutic effect of such pads is usually limited to between 2-30 days.

The shape of herbal mattresses, pads can be rectangular or rounded. Pads can be made self-adhesive, to adhere directly to the body.

With respect to the use of herbs, the product coming closest to the invention is a herbal pillow known under the name of Herbafill, made with the technology disclosed in WO2008090390.

The essence of this is that crushed dried herbs are dispersed evenly between natural or synthetic textile fibres, ensuring the ventilation of the herbs, as well as the storage of the active substances in the pillow. The part containing the herbs is covered by a protective cover.

A deficiency of the patent is that it does not cover the method of fixing herbs in a textile cover and/or other materials where the active substance extracted from the herbs is deposited in a pad suitable for this purpose. Pads made with the technology disclosed in the patent, as they are elastic and shape-retaining, are suitable for use as cushions, medicinal pads on dog harnesses, if the means of attaching and the shape of the device allow it.

The first self-adhesive first-aid plaster is disclosed in patent No. GB 837 226. The first-aid plaster has a protective film covering the self-adhesive parts and the antibacterial pad part in the middle part.

The device disclosed in patent No. WO 2006/029701 A1 is a medical plaster suitable for fixing on human joints. It comprises a pad part containing a preparation classified as medicine, having a protective film and an adhesive surface (fixing element) fixable to the injured body part in a releasable manner, and the active substances are absorbed through the skin. The disclosed plaster exerts its effect on the desired body part through the side covered by the adhesive layer. Neither of the patents mentions the use of herbs, and the design, shape and proportions of the plaster do not allow the use of the device on a dog harness.

The patent DE 3204099 disloses a cushion which placed on the human body. The cushion is divided into smaller parts by stitching and these small parts contain herbals or the like and at least a cord, zipper or self-adhesive fixing element is attached on the edge of cushion.

The patent EP 2243356 descibes a non-choking harness for a pet which evenly distributes stress throughout the chest area and away from the neck area of the pet when the leash is pulled to prevent choking.

In accordance with an exemplary embodiment of the claimed invention, the inner surface of the body part comprises a pouch or opening to receive an insert or pack. The insert can be infused with various fragrances, such as relaxing aromas, therapeutic aromas, colognes, perfumes, flea protection agents and the like.

The patent US 2007/245978 relates to equipping pet related articles with a pouch and herbal packets that are interchangeable and contain an exclusive blend of twelfe muscle-relaxing pain-relieving herbs.

In the prior art there are no pads containing herbs or the active substances thereof, comprising suitable fixing elements and attachable to a dog harness, most preferably a dog harness having a saddle part in a releasable manner.

With this invention the task is to prepare a herbal cushion attachable to a dog harness, comprising fixing elements attaching most preferably to the part resting on the back of the dog. Preferably, the curving of the herbal cushion attachable to a dog harness corresponds to that of the dog harness having a saddle part, allowing the use of the pad during sports activities, and facilitating the absorption of the active substances at the most optimum places (along the spine and at the joints of the front legs). The cushion shall be firmly attached, without damaging the straps and the inner lining of the dog harness. Its shape shall conform to the dog harness, the saddle part thereof resting on the back of the dog, the surface of which shall protect it from rainwater and humidity.

The aim of the development is to prepare a cushion, having a protective cover made of an environmentally friendly material, that remains firmly attached to the dog harness even under extreme conditions. The fixing elements of the cushion are most preferably self-adhesive, that is containing a hook and loop fastener and/or an adhesive material having a removable protective film disclosed in the prior art. The distribution of fixing elements shall be even and/or intermittent on the whole surface of the cushion. The active substance release of the cushion shall be limited at least on the fixing element side by a protective cover. As a result of heat generated between the dog harness and the body of the dog during movement, the release of active substances from the herbs becomes stronger.

It is possible to relieve e.g. the joint pains of an animal, or even to calm down a hyperactive animal during the walking of the dog, or in the case of a service dog during patrolling, for example. It is important to note that many dogs will not tolerate a mattress or blanket as a bedding, therefore it is not possible to treat them during sleep.

Thus the invention relates to a herbal cushion attachable to a dog harness, comprising a middle part in the intersection of the longitudinal axis and the transverse axis, and rounded side parts on both sides of the transverse axis in the continuation of the middle part, which side parts and the middle part are bordered by the same edging zone, furthermore a part containing herbs is included in the herbal cushion attachable to a dog harness.

The essence of the development is that the herbal cushion attachable to a dog harness has self-adhesive fixing elements (containing an adhesive material and/or a hook and loop fastener) that can be attached to the part of the dog harness resting on the back of the dog.

On the middle part of the herbal cushion attachable to a dog harness, on one side of the longitudinal axis, the edging zone is convex shaped, forming at least one domed part.

On the middle part of the herbal cushion attachable to a dog harness, on the side of the longitudinal axis opposite to the domed part, the edging zone is concave shaped, forming at least one hollow part.

Preferably, the herbal cushion attachable to a dog harness has a protective cover on at least one side.

Most preferably, the fixing elements are fixed to the protective cover of the herbal cushion attachable to a dog harness.

The fixing elements contain an adhesive material.

In the part containing herbs, dried and crushed herbs are dispersed evenly between at least two textile layers.

The development is illustrated in the following figures:
- Figure 1 shows a top view in a spread-out state, showing the axes and the hollow and domed shapes, as well as the fixing elements.
- Figure 2 shows a top view of a preferred arrangement of the fixing elements.
- Figure 3 shows a back view of the herbal cushion attachable to a dog harness, attached to a dog harness.
- Figure 4 shows the A-A cross-section according to Figure 2, showing the main parts of the dog harness and the inner structure of the herbal cushion attachable to a dog harness.
- Figure 5 shows the B-B cross-section according to Figure 1, showing the inner structure of the herbal cushion attachable to a dog harness.

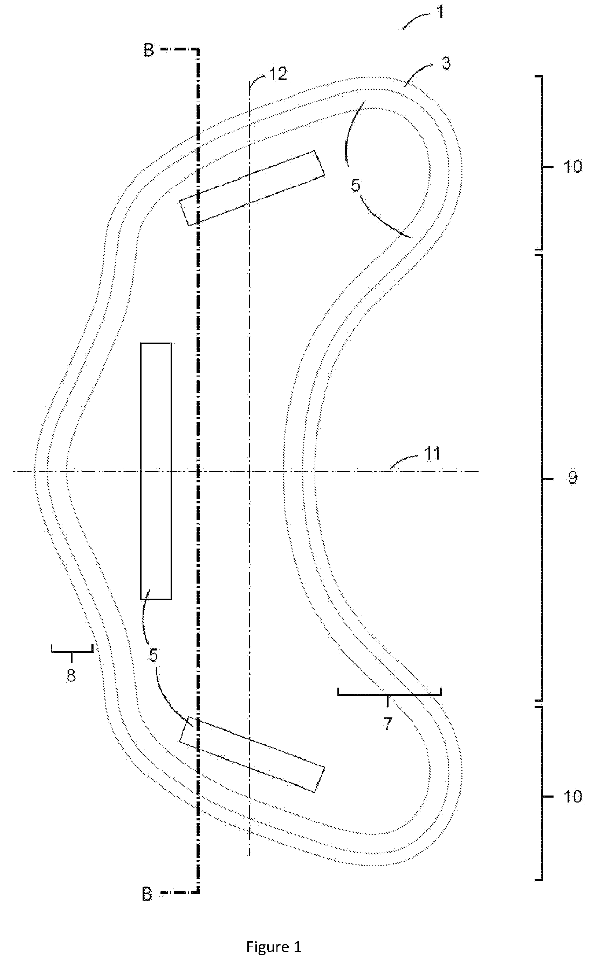

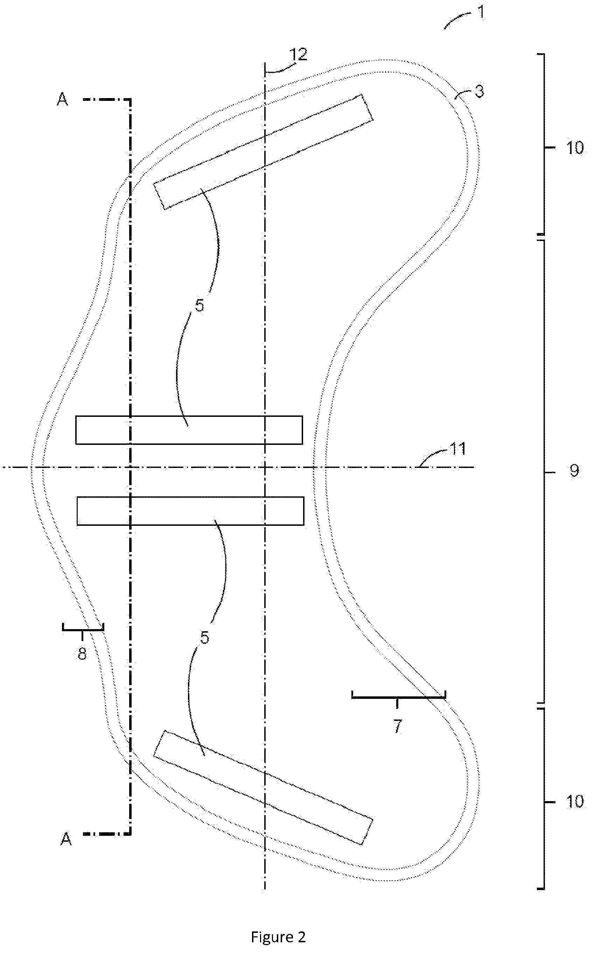

Figures 1 and 2 show the herbal cushion attachable to a dog harness 1 in a spread-out state, with two different inner structures as shown in the cross-sectional drawings (A-A, B-B). It can be seen that the herbal cushion attachable to a dog harness **1** is divided most preferably into two symmetrical halves, side parts **10** by the transverse axis **11** passing through the middle part **9** of the herbal cushion attachable to a dog harness **1.** The middle part **9** has on one side of the longitudinal axis **12** a hollow part **7** continuing in the side parts **10,** while on the other side of the longitudinal axis **12** a domed part **8** continuing in the side parts **10.** The middle part **9** and the side parts **10** are bordered by the same edging zone **3.** In Figure 1 the herbal cushion attachable to a dog harness **1** has fixing elements, that can be self-adhesive or hook and loop fasteners, arranged in a scattered manner and along the edging zone **3,** while in Figure 2 only ones arranged in a scattered manner. The edging zone **3** can be closed with an edging strip and/or can be pressed or sewn.

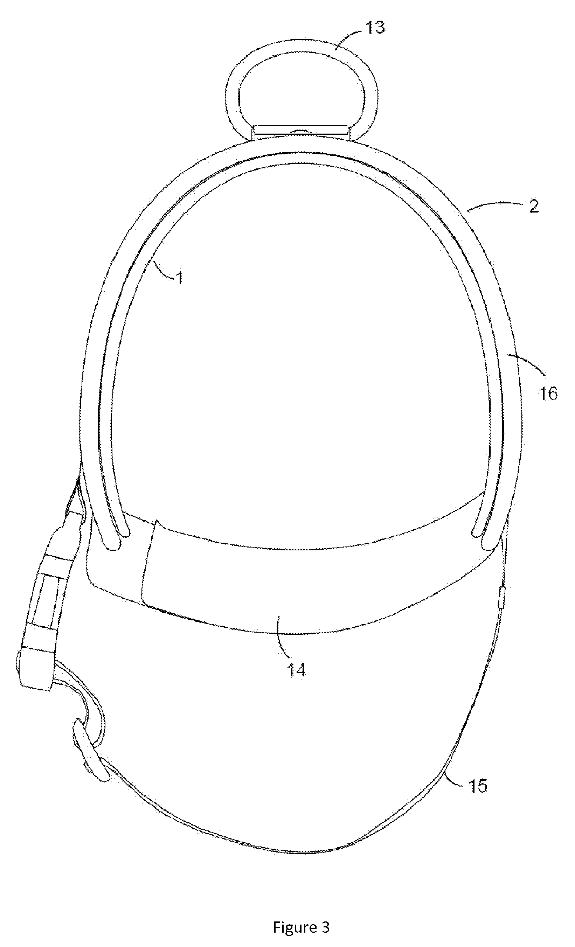

Figure 3 shows a dog harness **2** and a preferred embodiment of the herbal cushion attachable to a dog harness **1** attached in a releasable manner on the side towards the dog, where the herbal cushion attachable to a dog harness **1** is attached to the dog harness **2** as a lining of the part resting on the back of the dog **16,** the shape of which is identical to that of the herbal cushion attachable to a dog harness 1 shown in Figures 1 and 2. This allows the part resting on the back of the dog **16** to protect the herbal cushion attachable to a dog harness **1** from moisture coming from the outside. A leash ring **13,** a chest strap **14** and a belly strap **15** are fixed on the part resting on the back of the dog (saddle part) **16** of the dog harness **2.**

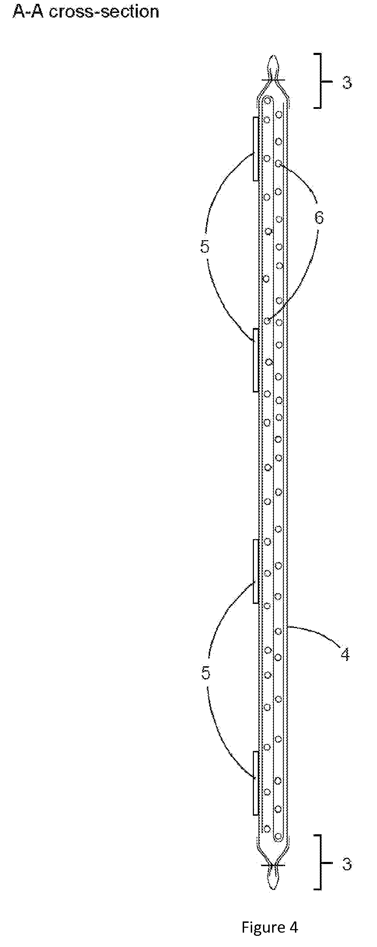

Figure 4 shows the A-A cross-section of the herbal cushion attachable to a dog harness **1** having an edging zone **3.** In the edging zone **3** the protective cover **4** and the part containing the herbs **6** are fixed together with an edging strip and by sewing. It can be seen that the part containing the herbs **6,** in this case consisting of herb pieces dispersed in a textile material, between natural and/or synthetic fabric, is covered by a protective cover **4** on two sides. On the side having the fixing elements 5 the protective cover **4** is preferably a more tightly woven and 30% heavier fabric than on the side opposite to the fixing elements **5.** This helps to ensure that the active substances exert their effects primarily towards the body of the dog. The fixing elements can be hook and loop fasteners or adhesive-treated.

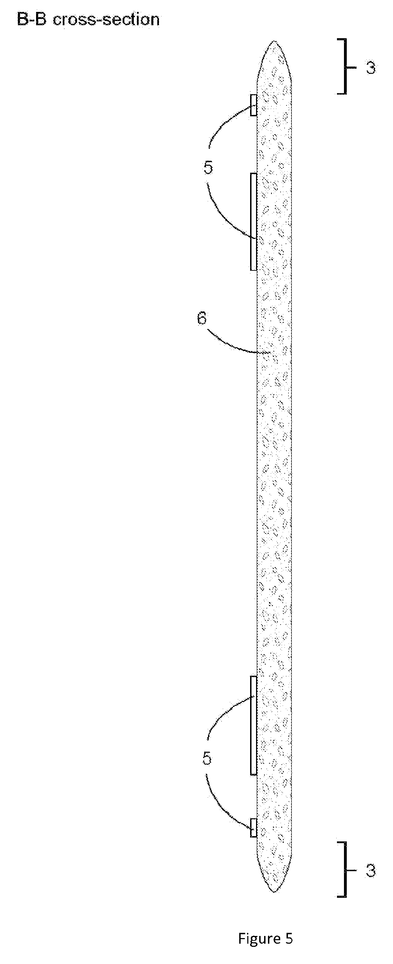

Figure 5 shows the B-B cross-section of the part containing the herbs **6,** bordered by an edging zone **3.** Here the part containing the herbs **6** is an absorbent material treated with the active substance extracted from the herbs, on one side of which are the fixing elements **5,** which are preferably self-adhesive, having an adhesive layer and a protective film. The absorbent material can be an elastic and shape-retaining natural or synthetic fibre and/or textile.

The herbal cushion attachable to a dog harness combines excellently the healing power inherent in herbs and movement. Attaching a pad containing dried herbs or their active substances in a concentrated way to a dog harness provides an opportunity for using it during work, movement. The self-adhesive method with an adhesive material and/or hook and loop fastener allows the removal and replacement of used pads. The cushion itself is most preferably made of a biologically degradable material.

### List of reference numbers

- **1)**: herbal cushion attachable to a dog harness
- **2)**: dog harness
- **3)**: edging zone
- **4)**: protective cover
- **5)**: fixing element
- **6)**: part containing herbs
- **7)**: hollow part
- **8)**: domed part
- **9)**: middle part
- **10)**: side part
- **11)**: transverse axis
- **12)**: longitudinal axis
- **13)**: leash ring
- **14)**: chest strap
- **15)**: belly strap
- **16)**: part resting on the back of the dog

## Claims

1. A herbal cushion attachable to a dog harness, comprising a middle part (9) in the intersection of the longitudinal axis (12) and the transverse axis (11), and rounded side parts (10) on both sides of the transverse axis (11) in the continuation of the middle part (9), which side parts (10) and the middle part (9) are bordered by the same edging zone (3), furthermore a part containing herbs is included in the herbal cushion attachable to a dog harness, wherein the herbal cushion attachable to a dog harness (1) has self-adhesive fixing elements (5), and on the middle part (9) of the herbal cushion attachable to a dog harness (1), on one side of the longitudinal axis (12), the edging zone (3) is convex shaped, forming at least one domed part (8).

2. The herbal cushion attachable to a dog harness **(1)** according to claims 1., **characterized in that** on the middle part **(9)** of the herbal cushion attachable to a dog harness **(1),** on the side of the longitudinal axis **(12)** opposite to the domed part **(8),** the edging zone **(3)** is concave shaped, forming at least one hollow part **(7).**

3. The herbal cushion attachable to a dog harness **(1)** according to claims 1-2, **characterized in that** the herbal cushion attachable to a dog harness **(1)** has a protective cover **(4)** on at least one side.

4. The herbal cushion attachable to a dog harness **(1)** according to claims 1-3, **characterized in that** the fixing elements **(5)** are fixed to the protective cover **(4)** of the herbal cushion attachable to a dog harness **(1).**

5. The herbal cushion attachable to a dog harness **(1)** according to claims 1-4, **characterized in that** the fixing elements **(5)** contain an adhesive material.

6. The herbal cushion attachable to a dog harness **(1)** according to claims 1-5, **characterized in that** in the part containing herbs **(6),** dried and crushed herbs are dispersed evenly between at least two textile layers.

## Patentansprüche

1. Pflanzliches Kissen zur Befestigung an einem Hundegeschirr, beinhaltet einen Mittelteil (9) am Schnittpunkt der
längsverlaufenden Achse (12) und der querverlaufenden Achse (11) und abgerundete Teile (10) auf beiden Seiten der
querverlaufenden Achse (11) in der Weiterführung des Mittelteils (9), dessen Seitenteile (10) und der Mittelteil (9)
durch dieselbe Kantenaußenseite (3) begrenzt sind,
desweiteren ist ein Teil, der Kräuter enthält, in dem
pflanzlichen Kissen zur Befestigung an einem Hundegeschirr enthalten, worin das pflanzliche Kissen zur Befestigung an einem Hundegeschirr (1) selbstklebende Befestigungselemente (5) hat und im Mittelteil (9) des pflanzlichen Kissens zur Befestigung an einem Hundegeschirr (1), auf einer Seite der längsseitigen Achse (12) ist die Kantenaußenseite (3) konvex geformt, so dass sie mindestens einen gewölbten Teil bildet (8).

2. Das pflanzliche Kissen zur Befestigung an einem Hundegeschirr (1) gemäß Anspruch 1., **dadurch gekennzeichnet, dass** auf dem Mittelteil (9) des pflanzlichen Kissens zur Befestigung an einem Hundegeschirr (1), auf der Seite der längsseitigen Achse (12) gegenüber dem gewölbten Teil (8), die Kantenaußenseite (3) konkav geformt ist und mindestens einen hohle Teil (7) bildet.

3. Das pflanzliche Kissen zur Befestigung an einem Hundegeschirr gemäß Ansprüche 1-2, **dadurch gekennzeichnet, dass** das pflanzliche Kissen zur Befestigung an einem Hundegeschirr (1) eine Schutzabdeckung (4) auf mindestens einer Seite hat.

4. Das pflanzliche Kissen zur Befestigung an einem Hundegeschirr (1) gemäß Anspruche 1-3, **dadurch gekennzeichnet, dass** die Befestigungselemente (5) an der Schutzabdeckung (4) des pflanzlichen Kissens zur Befestigung an einem Hundegeschirr (1) befestigt sind.

5. Das pflanzliche Kissen zur Befestigung an einem Hundegeschirr (1) gemäß Ansprüche 1-4, **dadurch gekennzeichnet, dass** die Befestigungselemente (5) ein Klebematerial enthalten.

6. Das pflanzliche Kissen zur Befestigung an einem Hundegeschirr (1) gemäß Ansprüche 1-5, **dadurch gekennzeichnet, dass** sich im Teil, der Kräuter enthält (6), getrocknete und zerkleinerte Kräuter gleichmäßig zwischen mindestens zwei Textillagen verteilt sind.

## Revendications

1. Un coussin aux plantes pouvant être fixé à un harnais pour chiens, est **caractérisé par** une partie intermédiaire (9) à l'intersection de l'axe longitudinal (12) et de l'axe transversal (11), ainsi que des parties latérales (10) arrondies sur les deux côtés de l'axe transversal (11) dans le prolongement de la partie intermédiaire (9), lesdites parties latérales (10) et la partie intermédiaire (9) étant entourées par la même zone de surfilage (3) ; en outre, une partie qui contient des plantes est comprise dans le coussin aux plantes pouvant être fixé à un harnais pour chiens de telle manière que le coussin aux plantes pouvant être fixé à un harnais pour chiens (1) comprenne des éléments de fixation auto-adhésifs (5). La zone de surfilage (3) est de forme convexe, formant au moins une partie bombée (8), dans la partie intermédiaire (9) du coussin aux plantes pouvant être fixé à un harnais pour chiens (1), sur un côté de l'axe longitudinal (12).

2. Le coussin aux plantes pouvant être fixé à un harnais pour chiens (1) conformément à la revendication 1, est **caractérisé par le fait que** la zone de surfilage (3) est de forme concave, formant au moins une partie creuse (7), dans la partie intermédiaire du coussin aux plantes pouvant être fixé à un harnais pour chiens (1), sur le côté de l'axe longitudinal (12) à l'opposée de la partie bombée (8).

3. Le coussin aux plantes pouvant être fixé à un harnais pour chiens (1) conformément aux revendications 1-2, est **caractérisé par le fait que** le coussin aux plantes pouvant être fixé à un harnais pour chiens (1) est doté d'un rabat de protection (4) au moins sur une des parties latérales.

4. Le coussin aux plantes pouvant être fixé à un harnais pour chiens (1) conformément aux revendications 1-3, est **caractérisé par le fait que** les éléments de fixation (5) sont accrochés au rabat de protection (4) du coussin aux plantes pouvant être fixé à un harnais pour chiens (1).

5. Le coussin aux plantes pouvant être fixé à un harnais pour chiens (1) conformément aux revendications 1-4, est **caractérisé par le fait que** les éléments de fixation (5) contiennent une matière adhésive.

6. Le coussin aux plantes pouvant être fixé à un harnais pour chiens (1) conformément aux revendications 1-5, est **caractérisé par le fait que** dans la partie qui contient des plantes (6), les plantes séchées et broyées sont dispersées uniformément entre au moins deux couches textiles.
